# FASCICULE DE BREVET EUROPEEN

(11) **EP 4 776 185 B1**
(45) Date de publication et mention de la délivrance du brevet: **18.11.2026**
(21) Numéro de dépôt: 25315007.2
(22) Date de dépôt: 08.01.2025
(51) Int. Cl.: G06N 3/045, H04L 67/568

(54) **ARCHITECTURE DE RÉSEAU 5G POUR LE TRAITEMENT DE REQUÊTES DE PROCESSUS D'INFÉRENCE LLM METTANT EN OEUVRE DES CACHES CLÉ-VALEUR**
5G-NETZWERKARCHITEKTUR ZUR VERARBEITUNG VON LLM-INFERENZPROZESSANFRAGEN UNTER NUTZUNG EINER SCHLÜSSEL-WERT CACHE-IMPLEMENTIERUNG
5G NETWORK ARCHITECTURE FOR HANDLING LLM INFERENCE PROCESS REQUESTS USING A KEY-VALUE CACHE IMPLEMENTATION

(43) Date de publication de la demande: 15.07.2026
(73) Titulaire: ILIAD, 75008 Paris (FR)
(72) Inventeur: Sayad, Khaled, 75008 Paris (FR); Escande, Patrick, 75008 Paris (FR)
(74) Mandataire: Dupuis-Latour, Dominique

(56) Documents cités:
- GUANQIAO QU ET AL: "Mobile Edge Intelligence for Large Language Models: A Contemporary Survey", ARXIV.ORG, CORNELL UNIVERSITY LIBRARY, 201 OLIN LIBRARY CORNELL UNIVERSITY ITHACA, NY 14853, 9 July 2024 (2024-07-09), XP091833571
- ZHAO YINGXUE ET AL: "Adaptive Partitioning and Placement for Two-Layer Collaborative Caching in Mobile Edge Computing Networks", IEEE TRANSACTIONS ON WIRELESS COMMUNICATIONS, IEEE SERVICE CENTER, PISCATAWAY, NJ, US, vol. 23, no. 8, 3 January 2024 (2024-01-03), pages 8215 - 8231, XP011978837, ISSN: 1536-1276, [retrieved on 20240104], DOI: 10.1109/TWC.2023.3346885

## Description

L'invention concerne les réseaux cellulaires mobiles de cinquième génération (5G), en particulier une architecture spécifiquement adaptée au traitement des interactions entre des équipements utilisateurs (UE) et des ressources associées à des grands modèles de langage (LLM). Dans la présente description, par "utilisateur", on entendra indifféremment non seulement des personnes physiques connectées au réseau 5G au moyen d'un smartphone en tant qu'UE, mais également - et surtout - des dispositifs matériels autonomes tels que par exemple des robots, des caméras de surveillance ou des véhicules pilotés, connectés au réseau cellulaire 5G et dont le profil est déjà renseigné dans une base d'utilisateurs du réseau cœur 5G, De la même façon, le terme de "requête" inclut tout type de message susceptible d'être généré à destination d'un LLM par de tels "utilisateurs", qu'il s'agisse de personnes physiques ou, de façon entièrement automatique, par des "utilisateurs" machine tels que des véhicules autoguidés (AGV, *Automated Guided Vehicles*), des robots industriels, ou tout autre appareil ou équipement évoluant dans un environnement de type loT (*Internet of Things,* Internet des objets).

### Domaine technique de l'invention

Ces utilisateurs sont susceptibles d'envoyer à des applications LLM des requêtes qui peuvent être produites en très grand nombre et à des cadences relativement élevées, notamment dans le cas des dispositifs matériels autonomes tels que les AGV, les robots industriels ou les dispositifs loT évoqués ci-dessus.

Une application LLM fonctionne en exécutant un modèle déjà entraîné pour traiter les tokens (au sens de l'intelligence artificielle) des requêtes envoyées par les utilisateurs, et générer les sorties correspondantes. L'invention vise le cas particulier des applications LLM mettant en oeuvre des processus d'inférence autorégressifs à couches multiples, notamment tels que les modèles "transformers".

Dans ces processus, pour chaque token en cours de traitement le modèle génère une clé "K" et une valeur "V" d'un vecteur résultant du traitement de cette requête par le modèle LLM. La clé K est généralement un hash résultant d'un encodage soit du token entré par l'utilisateur dans sa requête, soit de résultats de tokens d'entrée intermédiaires du processus autorégressif.

Pour que le modèle puisse générer de nouveaux tokens de sortie à traiter par la couche suivante du processus autorégressif, il est nécessaire de conserver temporairement la structure {clé ; valeur}, {K ; V}, dans un registre de données dénommé "cache clé-valeur", "cache KV" ou "KV cache". Ce cache est utilisé pour stocker le contexte des tokens précédents du processus autorégressif, afin que le modèle puisse prédire les tokens suivants de la séquence.

Par exemple, l'article de Guanqiao et al. "Mobile Edge Intelligence for Large Language Models: A Contemporary Survey", IEEE Communications Surveys & Tutorials, 2025, arXiv:2407.18921v1 [cs.NI] 09 Jul 2024, décrit l'implémentation de tels KV caches sur des dispositifs de réseau situés au niveau edge avec diverses techniques d'optimisation, par exemple par réduction dynamique de la taille des KV caches.

### État de la technique antérieure

L'invention vise spécifiquement la manière de gérer de tels caches dans le contexte particulier de requêtes LLM provenant d'utilisateurs d'un réseau mobile de type 5G.

Dans ce contexte, l'article de Zhao et al. "Adaptive Partitioning and Placement for Two-Layer Collaborative Caching in Mobile Edge Computing Networks," IEEE Transactions on Wireless Communications, Vol. 23, no. 8, 03 Jan 2024, pp. 8215-8231, propose de scinder le contenu de caches présents sur des serveurs edge entre caches privés et caches publics, en fonction de la similarité des caches d'un même groupe de gNB d'un réseau 5G.

Dans la suite de la description, par souci de simplification on utilisera simplement le terme "cache KV", mais il est bien entendu que ce terme doit être entendu dans son acception spécifique, restreinte, de structure de données {clé ; valeur} d'un processus d'inférence LLM autorégressif tel qu'exposé ci-dessus, et non dans son sens large courant de simple mémoire temporaire ou mémoire intermédiaire.

Également, le terme "cache KV" sera utilisé ici pour désigner l'emplacement mémoire stockant la structure de données {clé ; valeur} (c'est-à-dire pour désigner le contenant) et non la clé et la valeur stockées à cet emplacement (le contenu cognitif).

Un *premier problème* lié à l'utilisation des caches KV est la taille mémoire nécessaire. Celle-ci est très élevée et augmente avec le nombre de tokens traités, avec les dimensions des vecteurs K et V, et avec le nombre de couches du modèle LLM. On peut ainsi atteindre des tailles mémoire de plusieurs gigaoctets pour les modèles les plus performants. Deux manières de procéder sont possibles : soit les caches KV sont conservés dans la mémoire HBM (*High Bandwidth Memory*) intégrée à la puce des GPU utilisés par le modèle LLM, soit ils le sont dans une mémoire externe de grande capacité.

Dans le premier cas, on bénéficie de l'accès extrêmement rapide au cache KV (avec une bande passante de plusieurs centaines de gigaoctets par seconde), mais au prix d'une capacité mémoire limitée ; dans le second cas on s'affranchit des limitations de capacité, mais avec la contrepartie d'un ralentissement significatif du traitement des requêtes du fait de la moindre bande passante. Il est certes possible de prévoir un stockage différencié des caches KV, en gardant les caches KV actifs en mémoire HBM et en déplaçant les caches KV inactifs en mémoire externe, mais cela ne résout que partiellement la difficulté, et au prix d'une complexité de la gestion de la mémoire.

Un *second problème* tient au fait que les requêtes sont traitées individuellement par le modèle, quand bien même une partie des calculs auraient déjà été faits antérieurement, pour le même utilisateur ou pour d'autres utilisateurs.

De fait, afin de limiter le nombre de tokens et de caches KV, il serait souhaitable de pouvoir réutiliser des résultats de calculs déjà effectués dans un contexte semblable.

En particulier, du point de vue du fournisseur d'accès du réseau mobile, le transfert de paquets de requêtes LLM redondantes ou très similaires jusqu'aux serveurs hébergeant les applications LLM entraine une consommation inutile de ressources, avec des conséquences négatives sur la performance du processus LLM du fait de l'allongement des files d'attente, de l'accroissement du temps de traitement des requêtes, et de la charge accrue des serveurs hébergeant les applications LLM.

Également, lorsque les requêtes LLM sont associées à des tokens payants ou contingentés (par exemple un contingentement par département d'une entreprise), il est important d'en limiter l'usage, sachant que toute requête redondante aura inutilement entraîné la consommation d'un token.

Un *troisième problème* réside dans le fait que, du point de vue de l'utilisateur, les limitations que l'on vient d'exposer ont dans tous les cas pour effet d'augmenter la latence de la requête LLM, c'est-à-dire le délai entre la soumission de la requête et la réception de la sortie générée, attendue par l'utilisateur. Cette réactivité du modèle LLM peut notamment être évaluée par la métrique de performance TTFT (*Time To First Token),* qui est un paramètre particulièrement critique dans le cas d'utilisateurs qui sont des dispositifs matériels autonomes tels que des robots industriels ou des véhicules pilotés.

### Exposé de l'invention

Le but de l'invention est de remédier à l'ensemble de ces inconvénients et limitations, en proposant une architecture de réseau mobile 5G spécifiquement adaptée et optimisée pour le traitement de requêtes LLM mettant en œuvre des caches KV, avec partage optimal des ressources mémoire attribuées aux caches KV et, subsidiairement, prise en compte des similarités éventuelles de requêtes adressées à l'application LLM, notamment de requêtes en provenance d'utilisateurs qui se reconnectent successivement au réseau pour envoyer un même type de requête, ou entre utilisateurs de profils similaires au sein du même réseau d'accès. À cet effet l'invention propose une architecture pour le traitement des requêtes selon la revendication 1 annexée. Les sous-revendications visent, subsidiairement, des implémentations avantageuses de cette architecture de traitement des requêtes LLM.

### Brève description des dessins

La Figure 1 est un synoptique, sous forme de schéma par blocs, des différents éléments fonctionnels de l'architecture selon l'invention de traitement des caches KV par un réseau 5G.
La Figure 2 illustre la manière de gérer les différents caches KV au fil du temps pour optimiser les ressources disponibles dans le réseau en fonction de l'utilisation effective de ces caches KV.
La Figure 3 est un diagramme de flux illustrant l'initiation du processus de gestion des caches KV selon l'invention.
La Figure 4 est un diagramme de flux illustrant l'achèvement du processus de gestion des caches KV selon l'invention et la mise à jour de la distribution de ces caches KV au sein du réseau.

### Description détaillée de modes de réalisation de l'invention

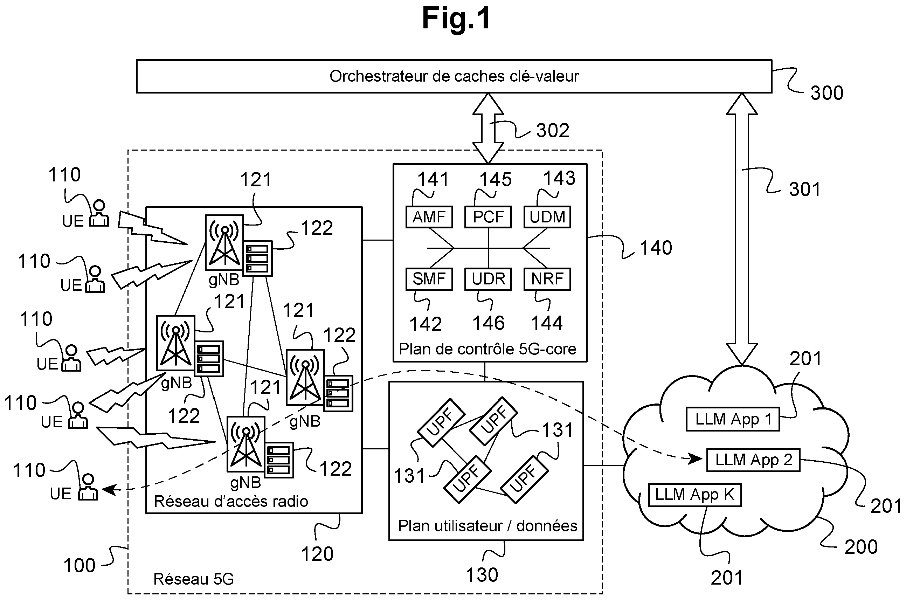

On va maintenant décrire un exemple de mise en oeuvre de l'invention, en référence aux dessins annexés où les mêmes références désignent d'une figure à l'autre des éléments identiques ou fonctionnellement semblables. Sur la Figure 1, la référence 100 désigne les principaux éléments constitutifs, en eux-mêmes connus, d'un réseau mobile 5G, cette dénomination étant entendue au sens spécifique tel que défini par les entités de normalisation, notamment le 3GPP. Il en sera de même pour les différents composants de ce réseau 5G cités dans la présente description tels que "réseau d'accès radio", "gNB", "plan de transport/plan de données", "UPF", "plan de contrôle," "5G-core", "AMF", "SMF", "NRF", "PCF", etc., qui doivent être entendus dans leur sens particulier, compris de l'homme du métier spécialiste des réseaux de communication mobile. La référence 110 désigne des équipements utilisateurs, UE, échangeant sans fil des informations avec le réseau 5G.

Comme indiqué plus haut, les utilisateurs peuvent être aussi bien des personnes physiques que des équipements purement matériels autonomes tels que des robots, des caméras ou des véhicules, dont le profil est déjà renseigné dans le réseau 5G.

Le réseau 5G 100 comprend une partie de réseau d'accès radio 120 avec un certain nombre de stations de base 121 telles que des gNB (dans la nomenclature des réseaux 5G), ou autre type comparable de nœuds de réseau, par exemple de type "small cell". Par la suite on ne fera référence qu'à des "gNB", mais ce terme doit être compris comme incluant également tout type de nœud fonctionnellement équivalent pour la mise en œuvre de l'invention.

À chaque gNB 121 sont associées des ressources propres de calcul et de mémoire 122 colocalisées avec le gNB et constituant un datacenter de proximité de type *far-edge server* situé au plus près des utilisateurs connectés au réseau d'accès 120.

Le réseau d'accès radio 120 est interfacé à un réseau distribué 130 de Fonctions de plan utilisateur, UPF, 131, le plan utilisateur faisant également fonction de plan de transport de données pour l'acheminement de paquets de données en provenance et à destination des UE 110.

Le plan utilisateur/plan de données 130 est interfacé à un plan de contrôle de réseau cœur 140 (5G-core) incluant les fonctions et ressources telles que :
- AMF 141 : Access and Mobility-management Function ;
- SMF 142 : Session-Management Function, fonction qui est chargée en lien avec l'AMF d'initier les sessions PDU des UE 110. Elle contrôle les UPF 131 du plan utilisateur en les programmant de manière à établir pour chaque UE le routage entre, d'une part, le gNB 121 auquel est connecté l'UE 110 et, d'autre part, les réseaux de données hors réseau 5G. Elle est également chargée de créer au niveau du plan de contrôle le lien de chaque UE connecté au réseau avec les applications LLM destinataires des requêtes émises par les utilisateurs ;
- UDM 143 : User-Data Management ;
- NRF 144 : Network-function Repository Function, qui est un registre de fonctions auprès duquel s'enregistrent toutes les instances des fonctions 5G afin qu'elles puissent être découvertes (*service discovery*) par les autres fonctions 5G. Elle enregistre également, pour les diverses instances des applications LLM, les domaines spécifiques servis (cette notion de "domaine", entendue au sens d'un département d'entreprise, sera développée plus bas), avec la plage correspondante des adresses IP des UE à desservir ;
- PCF 145 : Policy-Control Function ;
- UDR 146 : User-Data Repository, ce référentiel stockant notamment l'identité et le profil des différents UE connus du réseau.

De façon caractéristique de l'invention, les caches KV nécessaires au processus d'inférence des applications LLM ne sont pas stockés au niveau d'un serveur distant (tel que le serveur 200 hébergeant les applications LLM 201) ; ils le sont au niveau des gNB 121, notamment des ressources de calcul et de mémoire 122. Dans la mesure où les caches KV sont spécifiquement attribués à des utilisateurs respectifs, c'est le gNB auquel l'utilisateur en question est connecté qui conserve le cache KV attribué à cet utilisateur.

En second lieu, les caches KV situés au niveau des gNB sont des caches KV éphémères possédant une durée de vie limitée, avec une durée de vie ou TTL (*Time To Live*) de durée prédéterminée affectée à chaque cache KV.

De façon également caractéristique de l'invention, il est prévu un orchestrateur de caches KV 300 interfacé d'une part en 301 au serveur conservant les applications LLM 201, et d'autre part en 302 au réseau 5G 100 via le plan de contrôle 140.

L'orchestrateur 300 dispose via le plan de contrôle 140, des informations sur tous les caches KV conservés dans les gNB du réseau d'accès radio 120, notamment leur répartition géographique entre les divers gNB ; cette répartition sera ci-après appelée "statut de distribution des caches KV".

L'orchestrateur 300 dispose également, toujours via le plan de contrôle 140, d'informations sur les utilisateurs et leurs profils telles que :
- fréquence d'utilisation des applications LLM par l'utilisateur ;
- appartenance de l'utilisateur à un domaine prédéfini regroupant une pluralité d'utilisateurs ;
- niveau de privilège attribué à l'utilisateur ;
- degré de QoS garanti pour l'utilisateur ; et/ou
- souscription par l'utilisateur d'un abonnement à des services d'inférence LLM.

L'orchestrateur 300 dispose aussi, toujours via le plan de contrôle 140, d'informations sur les besoins/disponibilités en ressources du réseau 5G, à partir de métriques opérationnelles telles que :
- taux d'utilisation des gNB ;
- capacité mémoire disponible dans les gNB ;
- distribution/allocation des ressources réseau entre liaisons montante et descendante, uplink/downlink ;
- latence ;
- bande passante ; et/ou
- nombre maximum de tokens par seconde.

Pour obtenir automatiquement ces paramètres, la surveillance en continu du réseau 5G met avantageusement en oeuvre des algorithmes de type *machine learning* opérant à partir d'une base de connaissances préalablement constituée et mise à jour en permanence.

Le rôle de l'orchestrateur 300 est notamment, comme cela sera détaillé par la suite, d'assurer :
- le recueil des métriques propres aux utilisateurs et des métriques opérationnelles du réseau 5G indiquées ci-dessus ;
- la construction des caches KV attribués aux différents utilisateurs connectés au réseau 5G, et le calcul de leur durée de vie TTL respective ;
- la gestion de la distribution des caches KV, c'est-à-dire la définition de leur répartition entre les différents gNB ; et
- l'optimisation des caches KV pour éviter des redondances entre utilisations similaires, pour purger les caches KV qui ne sont plus utilisés, etc.

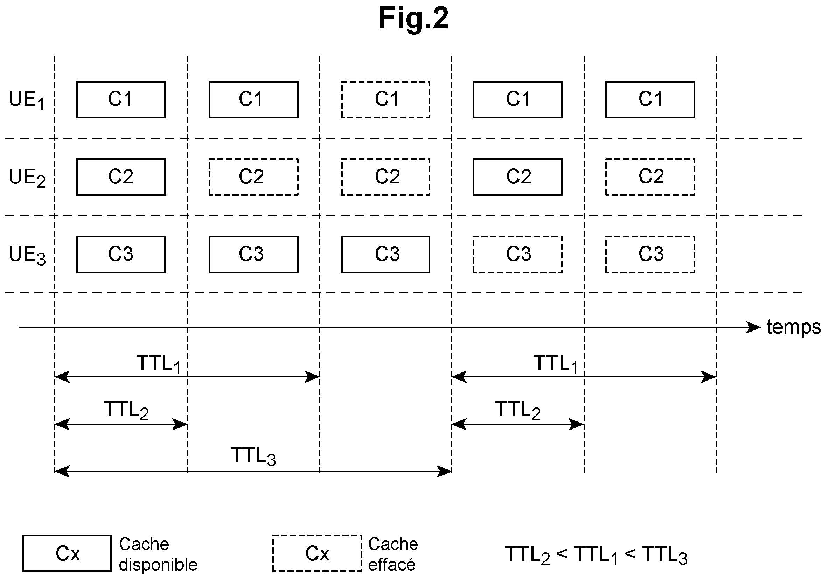

La Figure 2 illustre la manière dont sont gérés les caches KV, avec dans cet exemple trois caches KV C1, C2 et C3, ayant des durées de vie correspondantes TTL1, TTL2 et TTL3, attribués aux UE respectifs UE1, UE2 et UE3. Dans cet exemple, les durées de vie sont différentes, avec TTL1 = 2 périodes, TTL2 = 1 période et TTL3 = 3 périodes temporelles. La période temporelle choisie n'est pas critique, elle est seulement définie (i) suffisamment longue pour que la gestion des caches KV ne soit pas invasive pour le réseau (pas de risque de surcharge, de ralentissement, de besoins en ressources supplémentaires, etc.), et (ii) suffisamment courte pour que la mise à jour de la distribution des caches KV ait un effet notable sur la qualité de service à l'égard des requêtes émises par les utilisateur : moindre latence, meilleure réactivité (meilleur TTFT), etc. Une mise à jour horaire de la distribution des caches KV semble à cet égard un compromis satisfaisant dans la plupart des cas d'usage actuellement rencontrés.

Initialement, trois caches KV C1, C2 et C3 coexistent, pour les trois utilisateurs UE1, UE2 et UE3. À t= TTL2 (la plus courte des TTL), si par exemple UE2 est devenu inactif, alors son cache KV peut être effacé de manière à libérer des ressources mémoire dans le gNB auquel il était connecté.

A la période suivante *t* = TTL1 (correspondant à l'expiration de la durée de vie du cache KV C1 attribué à UE1), si UE1 est devenu inactif, son cache KV C1 peut également être effacé.

A la période suivante *t* = TTL3 (correspondant à l'expiration de la durée de vie du cache KV C3 attribué à UE3), UE3 étant devenu inactif son cache KV C3 est effacé ; mais comme, dans cet exemple, on constate à nouveau une activité en provenance de UE1 et UE2, pour chacun de ces utilisateurs un cache KV correspondant C1 et C2 est recréé au niveau du (des) gNB au(x)quel(s) sont connectés UE1 et UE2, avec les mêmes durées de vie respectives TTL1 et TTL2 que précédemment, et ainsi de suite pour les périodes suivantes.

On a ainsi opéré une purge dynamique des caches KV non utilisés dans le réseau, cette opération étant modulée en fonction du degré de persistance TTL plus ou moins grand attribué aux différents caches KV. En ce qui concerne la durée de vie TTL attribuée aux différents caches KV, celle-ci est avantageusement adaptée de manière à donner une plus longue durée de vie aux caches KV les plus fréquemment accédés par les utilisateurs, et *vice versa,* afin d'optimiser l'opération de purge dynamique des caches KV à intervalles réguliers.

Dans une mise en oeuvre avantageuse, l'invention propose également de fusionner une pluralité de caches KV existant à un instant donné en un seul et même cache KV fusionné, attribué en commun à une pluralité d'UE. Cette technique peut notamment être appliquée à la situation particulière où plusieurs utilisateurs ayant des profils comparables génèrent de façon concomitante des requêtes identiques ou similaires.

Il peut s'agir en particulier d'un groupe d'utilisateurs appartenant à un même "domaine", ce terme étant entendu comme un groupe d'utilisateurs correspondant par exemple à un même service parmi plusieurs services d'une même entreprise (production, marketing, comptabilité, etc.), les utilisateurs d'un même groupe étant susceptibles d'émettre des requêtes identiques ou comparables, différentes de celles d'un autre domaine de leur même entreprise.

Ces "domaines" peuvent être discriminés en fonction de l'adresse IP de session attribuée à l'utilisateur par le plan de contrôle 140, précisément par la fonction SMF 142, cette information pouvant être communiquée par le réseau 5G à l'orchestrateur 300 depuis le plan de contrôle 140.

En variante ou en complément, la discrimination entre groupes d'UE peut également s'effectuer sur la base de niveaux de privilèges différents attribués aux UE, les utilisateurs de privilège supérieur disposant par exemple d'un nombre contingenté supérieur de tokens autorisés pour l'émission de requêtes LLM. Des caches KV de plus longue durée de vie sont alors attribués à des utilisateurs de privilège supérieur aux autres. Dans de tels cas, il peut alors être avantageux, notamment pour augmenter la réactivité de la réponse aux requêtes LLM (moindre TTFT) de fusionner la pluralité de caches KV attribués aux différents utilisateurs de profil comparable en un même cache KV concaténé, de plus grande taille mais unique et commun à ces utilisateurs.

Avant de procéder à la fusion des caches KV, l'orchestrateur 300 fait en sorte que, parmi la pluralité de gNB accédés par les utilisateurs concernés, l'un de ces gNB soit déterminé comme optimal en fonction de certaines contraintes de QoS, notamment de contraintes de latence, de capacité et/ou de bande passante, le cache KV fusionné étant alors localisé à un emplacement mémoire réservé au niveau du gNB considéré comme optimal.

La concaténation peut être en particulier effectuée par un processus de communication pair-à-pair (P2P) direct entre les différents gNB concernés, de façon à communiquer horizontalement (c'est-à-dire de gNB à gNB au sein même du réseau d'accès 120 par exemple via une interface Xn) au gNB désigné comme optimal les informations et les données des autres gNB pairs.

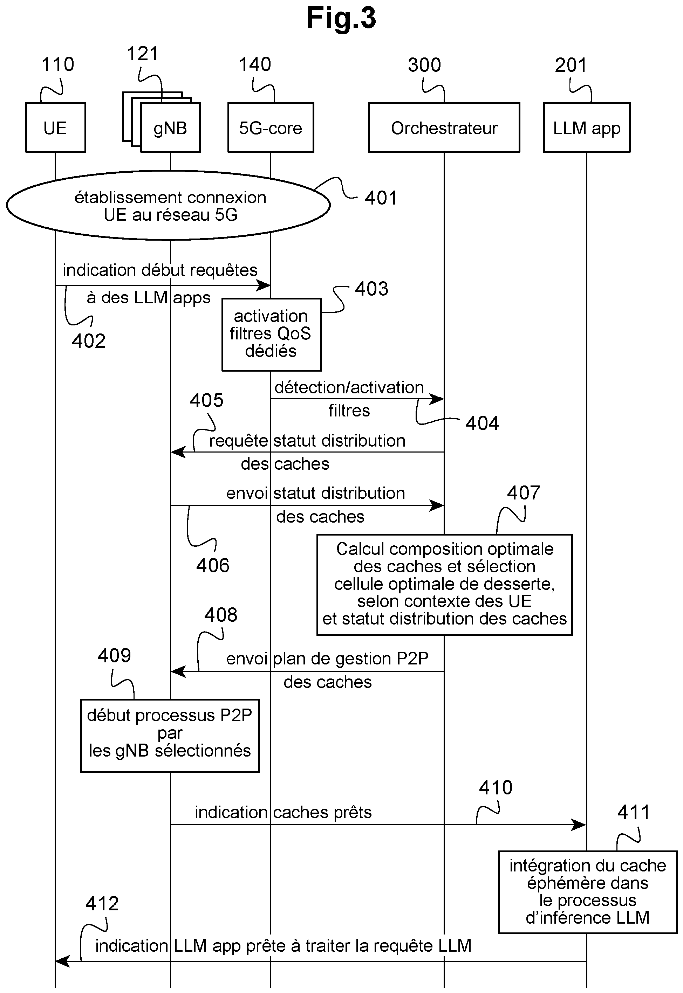

La Figure 3 est un diagramme de flux illustrant l'initiation du processus de gestion des caches KV selon l'invention.

Après que l'UE 110 a établi en 401 une connexion au réseau 5G par création d'une session à l'aide des fonctions AMF/SMF 141/142 du plan de contrôle 140, l'UE indique en 402 au plan de contrôle qu'il souhaite accéder à une ou plusieurs applications LLM par envoi de requêtes LLM correspondantes.

En 403, le plan de contrôle détermine les métriques de QoS applicables (métriques opérationnelles du réseau 5G d'une part, et métriques propres à l'utilisateur d'autre part), et envoie en 404 à l'orchestrateur 300 une signalisation de détection/activation des filtres QoS.

L'orchestrateur 300 envoie alors en 405 aux divers gNB 121 une requête d'interrogation destinée à établir le statut de la distribution des caches KV au sein du réseau d'accès radio 120.

Le statut de distribution des caches KV est envoyé en 406 du réseau d'accès radio 120 à l'orchestrateur 300 via le plan de contrôle 140.

En 407, l'orchestrateur 300 calcule la composition optimale des caches KV et sélectionne la cellule optimale pour desservir l'UE requérant, en fonction des divers paramètres de contexte des UE et du statut courant de la distribution des caches KV.

Le plan de gestion des caches KV résultant est adressé en 408 aux divers gNB 121 du réseau d'accès radio 120, ce qui déclenche en 409 un processus P2P entre les gNB sélectionnés par ce plan de gestion.

Une fois le processus P2P achevé, un message d'indication que les caches KV sont prêts est envoyé en 410 au serveur distant logeant les applications LLM 201 destinataires des requêtes que va émettre l'UE.

En 411, l'application LLM intègre dans le processus d'inférence les paramètres du cache KV éphémère au sein du réseau d'accès, par exemple sous forme d'un adressage permettant de retrouver le gNB où a été réservé un emplacement mémoire pour ce cache KV.

Le processus d'inférence de l'application LLM est alors prêt à être exécuté, ce qui est signalé à l'UE en 412 de manière qu'il puisse commencer à envoyer les tokens de la requête LLM.

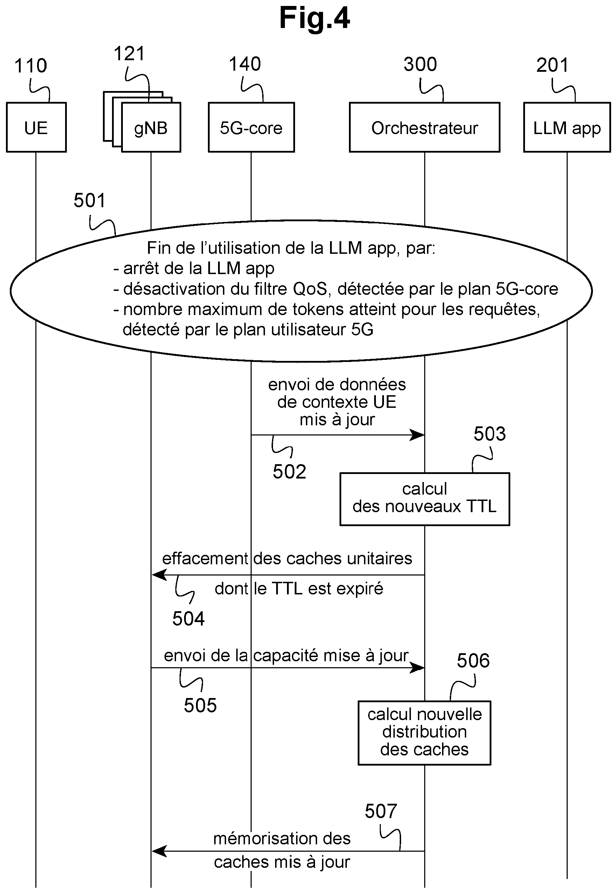

La Figure 4 est un diagramme de flux illustrant l'achèvement du processus de gestion des caches KV selon l'invention, avec mise à jour de la distribution des caches KV au sein du réseau.

Cet achèvement peut survenir dans plusieurs cas de figure, notamment : arrêt de l'application LLM, désactivation du filtre QoS détectée par le plan de contrôle 140, ou encore nombre maximum de tokens atteint pour les requêtes issues de cet utilisateur, détecté au niveau du plan utilisateur 130.

L'évènement est signalé en 501 aux différents éléments intervenant du réseau, à la suite de quoi le plan de contrôle 140 adresse en 502 à l'orchestrateur 300 les données de contexte mises à jour tenant compte de cette nouvelle situation.

L'orchestrateur 300 calcule en 503 les nouvelles valeurs des durées de vie TTL de manière à purger les caches KV dont le TTL est expiré, opération qui est déclenchée par un message envoyé en 504 aux gNB actifs 121 du réseau d'accès radio 120.

La nouvelle capacité de stockage des caches KV dans les gNB est alors calculée au niveau du réseau d'accès radio 120 par processus P2P, et le résultat est envoyé en 505 à l'orchestrateur 300.

Enfin, l'orchestrateur calcule en 506 la nouvelle distribution des caches KV au sein du réseau et transmet en 507 le statut correspondant aux différents gNB du réseau d'accès 120.

## Revendications

1. Une architecture de réseau mobile, pour le traitement de requêtes basées sur des Grands modèles de langage, LLM, émises à destination d'applications LLM (201) par des utilisateurs,
l'architecture comprenant un réseau 5G (100) avec :
- un réseau d'accès radio (120), pour la communication radiofréquence avec des équipements utilisateurs, UE (110), les UE (110) accédant au réseau par des nœuds d'accès 5G selon 3GPP, gNB (121), incluant des ressources *far-edge serverde* calcul et de mémoire (122) ;
- un réseau distribué (130) de Fonctions de plan utilisateur, UPF (131) programmables, faisant également fonction de plan de transport de données 5G pour l'acheminement de paquets de données de/vers les UE (110) ; et
- un plan de contrôle de réseau cœur (140), comprenant des fonctions 5G selon 3GPP,
dans laquelle, pour le traitement des requêtes LLM, les applications LLM (201) mettent en œuvre des processus d'inférence régressifs à couches multiples utilisant des caches clé-valeur (C1, C2, C3) alloués à des UE (110) respectifs,
**caractérisée en ce que** :
- les ressources de calcul et de mémoire (122) des gNB (121) sont configurées pour constituer un réseau pair-à-pair implémentant des caches clé-valeur (C1, C2, C3) distribués au sein du réseau 5G (100), aptes à mémoriser les requêtes LLM des UE (110), les gNB (121) desservant les UE (110) respectifs ;
- les caches clé-valeur (C1, C2, C3) sont des caches éphémères, possédant une durée de vie (TTL1, TTL2, TTL3) limitée ;
- l'architecture comprend en outre un orchestrateur de caches (300) apte à interagir d'une part avec les applications LLM (201) et d'autre part avec les gNB (121) via le plan de contrôle de réseau cœur (140) ;
- l'orchestrateur de caches (300) comprend des moyens aptes à créer les caches clé-valeur (C1, C2, C3), attribuer les caches clé-valeur (C1, C2, C3) créés aux UE (110) respectifs, déterminer la durée de vie (TTL1, TTL2, TTL3) des caches clé-valeur (C1, C2, C3) créés, et mettre à jour les caches clé-valeur (C1, C2, C3).

2. L'architecture de réseau mobile de la revendication 1, dans laquelle l'orchestrateur de caches (300) est apte à établir un plan de concaténation d'une pluralité de caches clé-valeur (C1, C2, C3) existants en un seul et même cache clé-valeur fusionné, attribué à une pluralité d'UE (110).

3. L'architecture de réseau mobile de la revendication 2, comprenant en outre des moyens de communication point-à-point, P2P, entre gNB (121) pour exécuter au sein du réseau d'accès radio (120) la concaténation de la pluralité de caches clé-valeur existants en un seul et même cache clé-valeur fusionné, suivant le plan de concaténation établi par l'orchestrateur de caches (300).

4. L'architecture de réseau mobile de la revendication 2, dans laquelle l'orchestrateur de caches (300) est apte, préalablement à la fusion de la pluralité de caches clé-valeur (C1, C2, C3), à déterminer, parmi une pluralité de gNB (121) du réseau d'accès radio (120), un gNB (121) déterminé comme optimal en fonction de contraintes de latence, de capacité, et/ou de bande passante, et à mémoriser le cache clé-valeur fusionné au niveau du gNB (121) ainsi déterminé.

5. L'architecture de réseau mobile de la revendication 2, dans laquelle l'orchestrateur de caches (300) est apte, après achèvement du traitement des requêtes LLM et en l'absence de requête LLM subséquentes, à supprimer le cache clé-valeur fusionné, attribuer des caches clé-valeur unitaires aux UE (110) du cache fusionné, et déterminer des durées de vie respectives pour chacun de ces caches clé-valeur unitaires.

6. L'architecture de réseau mobile de la revendication 1, dans laquelle la durée de vie (TTL1, TTL2, TTL3) de chaque cache clé-valeur (C1, C2, C3) est une durée de vie calculée à la création du cache clé-valeur par l'orchestrateur de caches (300) en fonction de métriques déterminées par le réseau 5G (100).

7. L'architecture de réseau mobile de la revendication 6, dans laquelle l'orchestrateur de caches (300) est apte à effacer automatiquement les caches clé-valeur (C1, C2, C3) après expiration de la durée de vie (TTL1, TTL2, TTL3) limitée.

8. L'architecture de réseau mobile de la revendication 6, dans laquelle l'orchestrateur de caches (300) est apte à attribuer une durée de vie accrue aux caches clé-valeur (C1, C2, C3) les plus fréquemment accédés.

9. L'architecture de réseau mobile de la revendication 6, dans laquelle les métriques pour le calcul de la durée de vie comportent des métriques opérationnelles du réseau 5G (100), comprenant :
- taux d'utilisation des gNB (121) ;
- capacité mémoire disponible dans les gNB (121) ;
- distribution/allocation des ressources réseau entre liaisons montante et descendante, uplink/downlink ;
- latence ;
- bande passante ; et/ou
- nombre maximum de tokens par seconde.

10. L'architecture de réseau mobile de la revendication 6, dans laquelle les métriques pour le calcul de la durée de vie comportent des métriques propres à l'utilisateur du cache clé-valeur, comprenant :
- fréquence d'utilisation des applications LLM (201) par l'utilisateur ;
- appartenance de l'utilisateur à un domaine prédéfini regroupant une pluralité d'utilisateurs ;
- niveau de privilège attribué à l'utilisateur ;
- degré de QoS garanti pour l'utilisateur ; et/ou
- souscription par l'utilisateur d'un abonnement à des services d'inférence LLM.

11. L'architecture de réseau mobile de la revendication 6, dans laquelle les métriques pour le calcul de la durée de vie comportent des métriques de similarité entre utilisateurs simultanés des caches clé-valeur, comprenant :
- appartenance ou non à un même domaine prédéfini regroupant une pluralité d'utilisateurs ; et/ou
- localisation géographique des utilisateurs identique ou voisine.

12. L'architecture de réseau mobile de la revendication 6, comprenant en outre des moyens de communication point-à-point entre gNB (121) pour l'échange direct d'informations relatives aux métriques de calcul de la durée de vie.

13. L'architecture de réseau mobile de la revendication 1, dans laquelle les UE (110) sont des équipements du groupe comprenant des smartphones, des robots autonomes, et/ou des caméras de surveillance vidéo, comportant un circuit permettant la connexion au réseau 5G (100), et dont le profil est déjà renseigné dans une base d'utilisateurs du réseau cœur (140) du réseau 5G (100).

## Patentansprüche

1. Mobilfunknetzarchitektur für die Verarbeitung von Anfragen, die auf großen Sprachmodellen, LLM, basieren und durch Benutzer an LLM-Anwendungen (201) ausgegeben werden, wobei die Architektur ein 5G-Netzwerk (100) umfasst, mit:
- einem Funkzugangsnetz (120) für die Hochfrequenzkommunikation mit Benutzerausrüstungen, UE, (110), wobei die UE (110) über 5G-Zugangsknoten gemäß 3GPP, gNB (121), auf das Netz zugreifen, einschließlich *Far-Edge-Server*-Rechen- und/oder Speicherressourcen (122);
- einem verteilten Netzwerk (130) von programmierbaren Benutzerebene-Funktionen, UPF, (131), das auch als 5G-Datentransportebene für die Weiterleitung von Datenpaketen von/zu den UE (110) dient; und
- einer Kernnetzwerk-Steuerungsebene (140), die 5G-Funktionen gemäß 3GPP umfasst,
wobei die LLM-Anwendungen (201), für die Verarbeitung der LLM-Anfragen, mehrschichtige regressive Inferenzprozesse implementieren, die Key-Value-Caches (C1, C2, C3) verwenden, die jeweiligen UE (110) zugewiesen sind, **dadurch gekennzeichnet, dass**:
- die Rechen- und/oder Speicherressourcen (122) der gNB (121) so konfiguriert sind, dass sie ein Peer-to-Peer-Netz bilden, das Key-Value-Caches (C1, C2, C3) implementiert, die in einem 5G-Netzwerk (100) verteilt sind und imstande sind, die LLM-Anfragen der UE (110) zu speichern, wobei die gNB (121) die jeweiligen UE (110) bedienen;
- die Key-Value-Caches (C1, C2, C3) kurzlebige Caches sind, die eine begrenzte Lebensdauer (TTL1, TTL2, TTL3) besitzen;
- die Architektur ferner einen Cache-Orchestrator (300) umfasst, der imstande ist, einerseits mit den LLM-Anwendungen (201) und andererseits mit den gNB (121) über die Kernnetzwerk-Steuerungsebene (140) zu interagieren;
- der Cache-Orchestrator (300) Mittel umfasst, um die Key-Value-Caches (C1, C2, C3) zu erzeugen, die erzeugten Key-Value-Caches (C1, C2, C3) den jeweiligen UE (140) zuzuweisen, die Lebensdauer (TTL1, TTL2, TTL3) der erzeugten Key-Value-Caches (C1, C2, C3) zu ermitteln und die Key-Value-Caches (C1, C2, C3) zu aktualisieren.

2. Mobilfunknetzarchitektur nach Anspruch 1, wobei der Cache-Orchestrator (300) imstande ist, einen Verknüpfungsplan für die Verknüpfung von mehreren vorhandenen Key-Value-Caches (C1, C2, C3) zu ein- und demselben fusionierten Key-Value-Cache zu erstellen, der mehreren UE (110) zugewiesen ist.

3. Mobilfunknetzarchitektur nach Anspruch 2, ferner umfassend Mittel für die Punkt-zu-Punkt-Verbindung, P2P, zwischen gNB (121), um in dem Funkzugangsnetz (120) die Verknüpfung der mehreren vorhandenen Key-Value-Caches zu ein- und demselben fusionierten Key-Value-Cache zu vollziehen, gemäß dem von dem Cache-Orchestrator (300) erstellten Verknüpfungsplan.

4. Mobilfunknetzarchitektur nach Anspruch 2, wobei der Cache-Orchestrator (300) imstande ist, vor der Fusion der mehreren Key-Value-Caches (C1, C2, C3), unter mehreren gNB (121) des Funkzugangsnetzes (120) ein gNB (121) zu ermitteln, das je nach Latenz-, Kapazitäts- und/oder Bandbreiten-Einschränkungen als optimal bestimmt wird, und den fusionierten Key-Value-Cache im Bereich des so ermittelten gNB (121) zu speichern.

5. Mobilfunknetzarchitektur nach Anspruch 2, wobei der Cache-Orchestrator (300) imstande ist, nach Abschluss der Verarbeitung der LLM-Anfragen und bei Fehlen nachfolgender LLM-Anfragen, den fusionierten Key-Value-Cache zu löschen, den UE (110) des fusionierten Cache einzelne Key-Value-Caches zuzuweisen und die jeweilige Lebensdauer für jeden dieser einzelnen Key-Value-Caches zu ermitteln.

6. Mobilfunknetzarchitektur nach Anspruch 1, wobei die Lebensdauer (TTL1, TTL2, TTL3) jedes Key-Value-Cache (C1, C2, C3) eine Lebensdauer ist, die bei der Erzeugung des Key-Value-Cache durch den Cache-Orchestrator (300) je nach von dem 5G-Netz (100) ermittelten Metriken berechnet wird.

7. Mobilfunknetzarchitektur nach Anspruch 6, wobei der Cache-Orchestrator (300) imstande ist, die Key-Value-Caches (C1, C2, C3) nach Ablauf der begrenzten Lebensdauer (TTL1, TTL2, TTL3) automatisch zu löschen.

8. Mobilfunknetzarchitektur nach Anspruch 6, wobei der Cache-Orchestrator (300) imstande ist, den Key-Value-Caches (C1, C2, C3), auf die am häufigsten zugegriffen wird, eine erhöhte Lebensdauer zuzuweisen.

9. Mobilfunknetzarchitektur nach Anspruch 6, wobei die Metriken für die Berechnung der Lebensdauer Betriebsmetriken des 5G-Netzes (100) enthalten, umfassend:
- Nutzungsrate der gNB (121);
- verfügbare Speicherkapazität in den gNB (121);
- Verteilung/Zuweisung der Netzwerkressourcen zwischen Uplink- und Downlink-Verbindungen;
- Latenz;
- Bandbreite; und/oder
- maximale Anzahl an Token pro Sekunde.

10. Mobilfunknetzarchitektur nach Anspruch 6, wobei die Metriken für die Berechnung der Lebensdauer dem Benutzer des Key-Value-Cache eigene Metriken enthalten, umfassend:
- Nutzungshäufigkeit der LLM-Anwendungen (201) durch den Benutzer;
- Zugehörigkeit des Benutzers zu einer vordefinierten Domäne, die mehrere Benutzer zusammenfasst;
- dem Benutzer zugewiesene Benutzerebene;
- für den Benutzer garantiertes QoS-Level; und/oder
- Zeichnung eines Abonnements für LLM-Inferenz-Dienste durch den Benutzer.

11. Mobilfunknetzarchitektur nach Anspruch 6, wobei die Metriken für die Berechnung der Lebensdauer Metriken für die Ähnlichkeit zwischen gleichzeitigen Benutzern der Key-Value-Caches enthalten, umfassend:
- Zugehörigkeit oder Nicht-Zugehörigkeit zu einer vordefinierten Domäne, die mehrere Benutzer zusammenfasst; und/oder
- gleicher oder nahe gelegener geografischer Standort der Benutzer.

12. Mobilfunknetzarchitektur nach Anspruch 6, ferner umfassend Mittel für die Punkt-zu-Punkt-Verbindung zwischen gNB (121) für den direkten Austausch von Informationen in Bezug auf die Metriken zur Berechnung der Lebensdauer.

13. Mobilfunknetzarchitektur nach Anspruch 1, wobei die UE (110) Ausrüstungen der Gruppe sind, die Smartphones, autonome Roboter und/oder Videoüberwachungskameras umfasst, die eine Schaltung aufweisen, die die Verbindung mit dem 5G-Netzwerk (100) ermöglicht und deren Profil bereits in einer Benutzerdatenbank des Kernnetzwerks (140) des 5G-Netzwerks (100) erfasst ist.

## Claims

1. A mobile network architecture, for processing requests based on Large Language Models, LLMs, issued to LLM applications (201) by users, wherein the architecture comprises a 5G network (100) with:
- a radio access network (120), for radiofrequency communication with user equipments, UEs (110), the UEs (110) accessing the network via 5G access nodes according to 3GPP, gNBs (121), including far-edge server calculation and storage resources (122);
- a distributed network (130) of programmable user plane functions, UPFs (131), also acting as a 5G data transport plane for routing data packets towards/from the UEs (110); and
- a core network control plane (140) comprising 5G functions according to 3GPP,
wherein, for processing LLM requests, the LLM applications (201) implement multi-layer regressive inference processes using key-value caches (C1, C2, C3) allocated to respective UEs (110),
and wherein:
- the calculation and storage resources (122) of the gNBs (121) are configured to form a peer-to-peer network implementing key-value caches (C1, C2, C3) distributed within the 5G network (100), adapted to store the LLM requests from the UEs (110), wherein the gNBs (121) serve the respective UEs (110);
- the key-value caches (C1, C2, C3) are ephemeral caches with a limited lifetime (TTL1, TTL2, TTL3) ;
- the architecture further comprises a cache scheduler (300) adapted to interact, on the one hand, with the LLM applications (201) and, on the other hand, with the gNBs (121) via the core network control plane (140); and
- the cache scheduler (300) comprises means adapted to create the key-value caches (C1, C2, C3), assign the created key-value caches (C1, C2, C3) to the respective UEs (110), determine the lifetime (TTL1, TTL2, TTL3) of the created key-value caches (C1, C2, C3), and update the key-value caches (C1, C2, C3).

2. The mobile network architecture of claim 1, wherein the cache scheduler (300) is adapted to establish a concatenation scheme for a plurality of existing key-value caches (C1, C2, C3) into a single merged key-value cache, allocated to a plurality of UEs (110).

3. The mobile network architecture of claim 2, further comprising point-to-point, P2P, communication means between gNBs (121) to execute within the radio access network (120) a concatenation of the plurality of existing key-value caches into a single merged key-value cache, according to a concatenation scheme established by the cache scheduler (300).

4. The mobile network architecture of claim 2, wherein the cache scheduler (300) is adapted, previously to the merging of the plurality of key-value caches (C1, C2, C3), to determine, among a plurality of gNBs (121) of the radio access network (120), a gNB (121) determined as being optimum based on latency, capacity and/or bandwidth constraints, and to store the merged key-value cache at the so-determined gNB (121).

5. The mobile network architecture of claim 2, wherein the cache scheduler (300) is adapted, after completion of the LLM request processing and in the absence of subsequent LLM request, to suppress the merged key-value cache, assign unitary key-value caches to the UEs (110) of the merged cache, and determine respective lifetimes for each of these unitary key-value caches.

6. The mobile network architecture of claim 5, wherein the lifetime (TTL1, TTL2, TTL3) of each key-value cache (C1, C2, C3) is a lifetime calculated at the creation of the key-value cache by the cache scheduler (300) based on metrics determined by the 5G network (100).

7. The mobile network architecture of claim 6, wherein the cache scheduler (300) is adapted to automatically clear the key-value caches (C1, C2, C3) after expiry of the limited lifetime (TTL1, TTL2, TTL3).

8. The mobile network architecture of claim 6, wherein the cache scheduler (300) is adapted to assign an increased lifetime to the most frequently accessed key-value caches (C1, C2, C3).

9. The mobile network architecture of claim 6, wherein the lifetime calculation metrics include operational metrics of the 5G network (100), comprising:
- rate of use of the gNB (121);
- storage capacity available in the gNBs (121);
- distribution/allocation of the network resources between uplink and downlink;
- latency;
- bandwidth; and/or
- maximum number of tokens per second.

10. The mobile network architecture of claim 6, wherein the lifetime calculation metrics include metrics specific to the key-value cache user, comprising:
- frequency of use of the LLM applications (201) by the user;
- belonging of the user to a predefined domain gathering a plurality of users;
- privilege level assigned to the user;
- QoS degree guaranteed to the user; and/or
- subscription by the user to LLM inference services.

11. The mobile network architecture of claim 6, wherein the lifetime calculation metrics include metrics of similarity between simultaneous users of the key-value caches, comprising:
- belonging or not to a same predefined domain grouping a plurality of users; and/or
- identical or close geographic location of the users.

12. The mobile network architecture of claim 6, further comprising point-to-point communication means between gNBs (121) for a direct exchange of information relating to the lifetime calculation metrics.

13. The mobile network architecture of claim 1, wherein the UEs (110) are devices of the group comprising smartphones, autonomous robots, and/or video surveillance cameras, including a circuit for connection to the 5G network (100) and whose profile has already been entered into a 5G-network core network user database.
